# EUROPÄISCHE PATENTSCHRIFT

(11) **EP 0 845 099 B1**
(45) Veröffentlichungstag und Bekanntmachung des Hinweises auf die Patenterteilung: **20.08.2008**
(21) Anmeldenummer: 97906995.2
(22) Anmeldetag: 10.01.1997
(51) Int. Cl.: G01F 1/684

(54) **VORRICHTUNG ZUR MESSUNG DER MASSE EINES STRÖMENDEN MEDIUMS**
DEVICE FOR MEASURING THE AMOUNT OF A FLOWING MEDIUM
DISPOSITIF POUR MESURER LE VOLUME D'UN FLUIDE EN ECOULEMENT

(30) Priorität: 12.06.1996 DE 19623334
(43) Veröffentlichungstag der Anmeldung: 03.06.1998
(73) Patentinhaber: ROBERT BOSCH GMBH, 70442 Stuttgart (DE)
(72) Erfinder: STAHL, Axel, D-71229 Leonberg (DE); MÜLLER, Wolfgang, D-71277 Rutesheim (DE); KONZELMANN, Uwe, D-71679 Asperg (DE)
(86) Internationale Anmeldenummer: PCT/DE1997/000044
(87) Internationale Veröffentlichungsnummer: WO 1997/047952

(56) Entgegenhaltungen:
- EP-A- 0 313 089
- EP-A- 0 441 523
- DE-A- 4 407 209

## Beschreibung

### Stand der Technik

Die Erfindung geht aus von einer Vorrichtung zur Messung der Masse eines strömenden Mediums nach der Gattung des Anspruchs 1. Es ist schon eine Vorrichtung bekannt (DE-OS 44 07 209), die ein temperaturabhängiges Meßelement aufweist, das in einem Meßkanal untergebracht ist. Der Meßkanal erstreckt sich in der Vorrichtung von einem Einlaß zu einem Auslaß, an den sich ein eine S-Form aufweisender Umlenkkanal anschließt. Der Umlenkkanal setzt sich aus einem ersten Teilstück und einem zweiten Teilstück zusammen. Das erste Teilstück weist ein rechtwinkliges Eck auf und geht an einer Randfläche in das zweite Teilstück über. Das strömende Medium strömt vom Auslaß des Meßkanals zunächst in das erste Teilstück des Umlenkkanals, das einen größeren Strömungsquerschnitt als der Meßkanal aufweist, so daß ein abrupter Strömungsübergang in Form einer Stufe zu dem ersten Teilstück vorhanden ist. Anschließend gelangt das Medium vom ersten Teilstück umgelenkt von der Ecke entlang der Randfläche des ersten Teilstücks in das sich quer anschließende zweite Teilstück des Umlenkkanals und verläßt dieses aus einer Auslaßöffnung, um sich mit dem um die Vorrichtung vorbeiströmenden Medium wieder zu vermischen.

Bei einer Brennkraftmaschine treten durch das Öffnen und das Schließen der Einlaßventile der einzelnen Zylinder erhebliche Schwankungen beziehungsweise Pulsationen der Strömung auf, deren Stärke abhängig von der Ansaugfrequenz der einzelnen Kolben beziehungsweise von der Drehzahl der Brennkraftmaschine ist. Die Pulsationen der Strömung pflanzen sich von den Einlaßventilen über die Ansaugleitung bis zum Meßelement im Meßkanal und darüber hinaus fort. Die Pulsationen bewirken, daß abhängig von der Stärke der Pulsationen durch eine thermische Trägheit und Richtungsunempfindlichkeit des Meßelements dieses ein Meßergebnis bereitstellt, das erheblich von der im Mittel im Meßkanal herrschenden Strömungsgeschwindigkeit und der daraus errechenbaren Ansaugluftmasse der Brennkraftmaschine abweichen kann. Der Meßkanal und der Umlenkkanal sind in ihren Abmessungen derart aufeinander abgestimmt, daß bei pulsierender Strömung in der Ansaugleitung die aufgrund der Strömungsschwankungen auftretende Fehlanzeige des Meßelements minimal ist. Dennoch kann es bei hohen Pulsationsfrequenzen und signifikanter Pulsationsamplitude aufgrund von strömungsakustischen Vorgängen im Umlenkkanal zu einer Fehlanzeige der Ansaugluftmasse kommen. Diese Fehlanzeige entsteht insbesondere dadurch, daß bei pulsierender Strömung stromabwärts des Meßelements an der Stufe zwischen dem Ausgang des Meßkanals und der Ecke am ersten Teilstück des Umlenkkanals eine Druckwelle auftreten kann, welche an der Randfläche des Umlenkkanals am Eck reflektiert wird, so daß durch einen Rückkopplungseffekt das Meßsignal des Meßelements gestört wird.

Aus der EP 0 313 089 A2 ist weiterhin eine Vorrichtung zur Messung der Masse eines strömenden Mediums bekannt, die ein temperaturabhängiges Meßelement aufweist, das in einem Meßkanal untergebracht ist. Der Meßkanal erstreckt sich in der Vorrichtung von einem Einlaß zu einem Auslaß, an den sich ein gerader Umlenkkanal anschließt. Der Umlenkkanal verläuft senkrecht oder unter einen spitzen oder stumpfen Winkel schräg zum Messkanal und mündet endseitig in einer Auslassöffnung.

Aus der EP 0 441 523 A1 ist ein Luftmassenmesser bekannt, bei dem sich an den Messkanal ein senkrecht zu dem Messkanal verlaufender Umlenkkanal anschließt. Der Übergangsbereich am Ende des Messkanals in den Umlenkkanal ist mit einem gerundeten Eck versehen, das in der Projektion des Auslasses des Messkanals auf die gegenüberliegende Wandung des Umlenkkanals liegt.

### Vorteile der Erfindung

Die erfindungsgemäße Vorrichtung zur Messung der Masse eines strömenden Mediums mit den Merkmalen des Anspruchs 1 hat demgegenüber den Vorteil, daß nahezu unabhängig von einer schwankenden oder pulsierenden Strömung ein gleichbleibend präzises Meßergebnis erzielbar ist. Vorteilhafterweise ist dies möglich, ohne dabei den Abstand zwischen der Randfläche des ersten Teilstücks des Umlenkkanals zum Auslaß des Meßkanals verändern zu müssen, so daß die Abstimmung des gesamten Kanals bestehend aus Meßkanal und Umlenkkanal nicht beeinträchtigt wird, wodurch eine kompakte Bauweise der Vorrichtung beibehalten werden kann. Mittels einer im Umlenkkanal vorgesehenen Strömungsverbindung zur Außenströmung in der Ansaugleitung in Form einer Öffnung kann eine eventuell noch vorhandene Reststörung der Druckwelle im Umlenkkanal gänzlich ausgeschaltet werden, so daß sich eine Verbesserung des Meßergebnisses ergibt. Darüber hinaus weist die Vorrichtung ein deutlich reduziertes Meßsignalrauschen auf, das durch im Meßkanal auftretende Turbulenzen entstehen kann.

Durch die in den Unteransprüchen aufgeführten Maßnahmen sind vorteilhafte Weiterbildungen und Verbesserungen der im Anspruch 1 angegebenen Vorrichtung möglich.

### Zeichnung

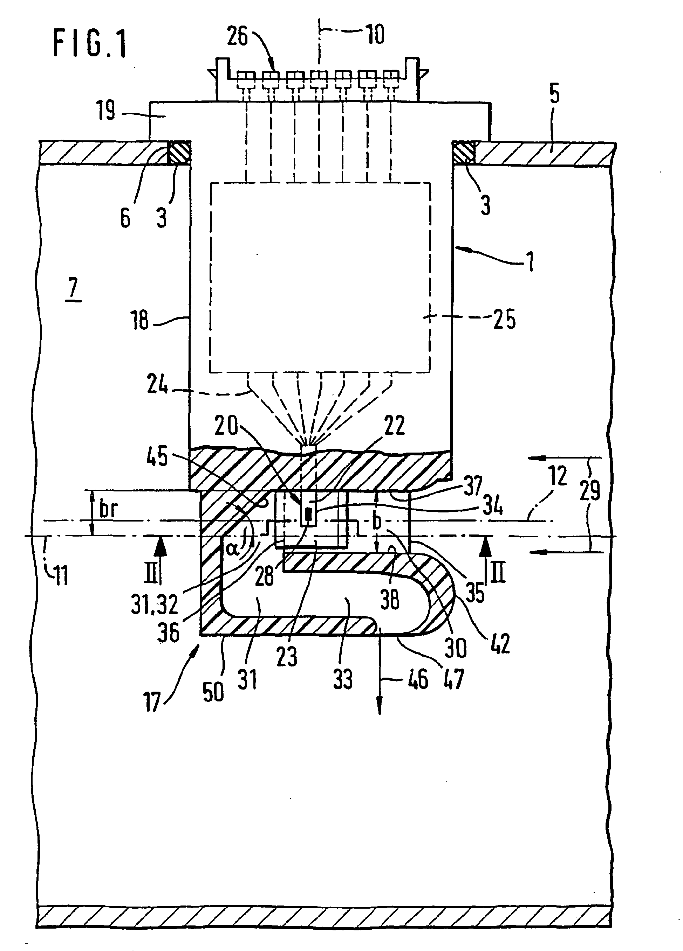

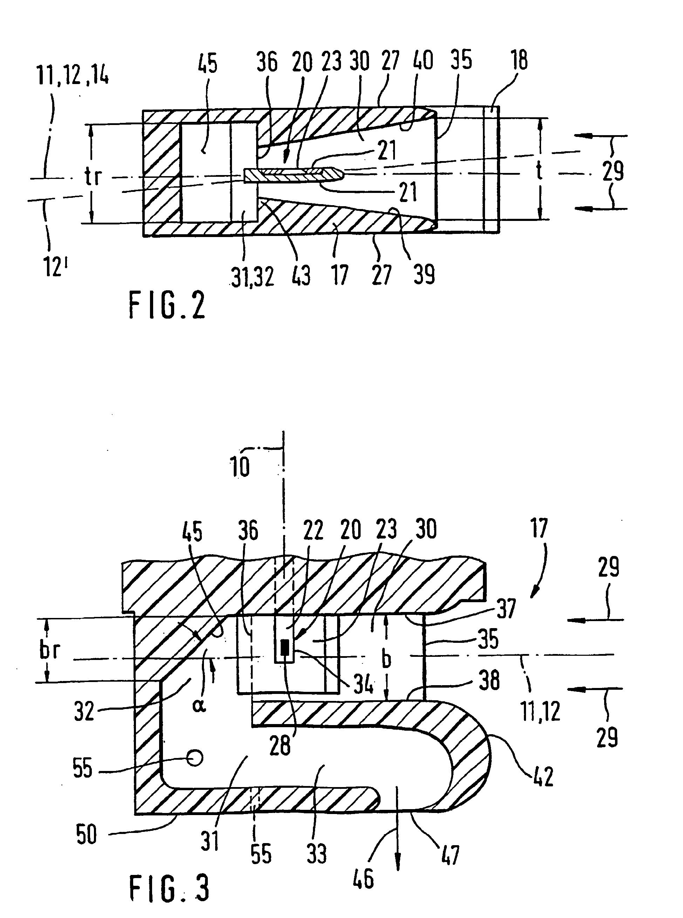

Ausführungsbeispiele der Erfindung sind in der Figur 3 vereinfacht dargestellt und in der nachfolgenden Beschreibung näher erläutert. Es zeigen Figur 1 in teilweiser Schnittdarstellung eine Seitenansicht einer nicht erfindungsgemäß ausgebildeten Vorrichtung, Figur 2 einen Schnitt entlang der Linie II-II in Figur 1, Figur 3 zeigt eine Schnittdarstellung der ausgebildeten Vorrichtung nach der Erfindung.

Die Figur 1 zeigt in teilweiser Schnittdarstellung eine Seitenansicht einer mit 1 gekennzeichneten Vorrichtung, die zur Messung der Masse eines strömenden Mediums, insbesondere der Ansaugluftmasse von Brennkraftmaschinen, dient. Die Vorrichtung 1 hat vorzugsweise eine schlanke, sich radial in Richtung einer Längsachse 10 länglich erstreckende, quaderförmige Gestalt und ist in eine aus einer Wandung 5 ausgenommenen Öffnung 6 einer Ansaugleitung 7 zum Beispiel steckbar eingeführt. Die Vorrichtung 1 ist mittels eines Dichtringes 3 in der Wandung 5 abgedichtet und beispielsweise mittels einer nicht näher dargestellten Schraubverbindung mit dieser fest verbunden. Die schraffiert dargestellte Wandung 5 ist Teil der beispielsweise zylindrisch ausgebildeten Ansaugleitung 7, durch die hindurch die Brennkraftmaschine über einen nicht näher dargestellten Luftfilter Luft aus der Umgebung ansaugen kann. Die Wandung 5 der Ansaugleitung 7 begrenzt einen Strömungsquerschnitt, der im Fall der zylindrischen Ansaugleitung 7 etwa einen kreisrunden Querschnitt aufweist, in dessen Mitte sich in axialer Richtung, parallel zur Wandung 5 eine Mittelachse 11 erstreckt, die senkrecht zur Längsachse 10 orientiert ist. Die Vorrichtung 1 ragt mit einem im folgenden als Meßteil 17 bezeichneten Teil in das strömende Medium, wobei der Meßteil 17 sich beispielsweise bis über die Mitte der Ansaugleitung 7 erstreckt und von einer Ebene durch die Mittelachse 11, die in der Zeichenebene liegt, symmetrisch aufgeteilt wird, damit ein im Meßteil 17 untergebrachtes, temperaturabhängiges Meßelement 20 möglichst ohne störende Randeinflüsse der Wandung 5 angeströmt werden kann. In den Ausführungsbeispielen gemäß den Figuren 1 bis 3 strömt das Medium von rechts nach links, wobei entsprechende Pfeile 29 die Strömungsrichtung kennzeichnen.

Die Vorrichtung 1 setzt sich einstückig aus dem Meßteil 17, einem Trägerteil 18 und einem Halteteil 19 zusammen und ist zum Beispiel aus Kunststoff in Kunststoffspritzgußtechnik hergestellt. Das Meßelement 20 ist beispielsweise plattenförmig ausgebildet und besitzt, wie dem Stand der Technik, beispielsweise der DE-OS 36 38 138 zu entnehmen ist, einen oder mehrere temperaturabhängige Widerstände 28, die in Form von Widerstandsschichten, sogenannten Heißfilmwiderständen, auf einem als Trägerkörper 22 dienenden plattenförmigen Keramiksubstrat aufgebracht sind. Es ist aber auch möglich, wie in Figuren 1 und 3 dargestellt und beispielsweise der DE-OS 43 38 891 entnehmbar ist, das Meßelement 20 in Form eines sogenannten mikromechanischen Bauteils auszubilden. Das Meßelement 20 besitzt dabei einen Trägerkörper 22 mit einem durch Ausätzen entstandenen membranförmigen Sensorbereich mit einer äußerst geringen Dicke und mehrere, ebenfalls durch Ausätzen entstandene Widerstandsschichten, die wenigstens einen temperaturabhängigen Meßwiderstand 28 und beispielsweise einen Heizwiderstand bilden. Das Meßelement 20 wird also aus wenigstens einem plattenförmigen, beispielsweise aus Keramik bestehenden Trägerkörper 22 und wenigstens einem temperaturabhängigen Widerstand 28 gebildet. Der Trägerkörper 22 ist in eine Aussparung 34 einer zum Beispiel aus Metall bestehenden Aufnahme 23 bündig in dieser untergebracht und zum Beispiel durch Klebung gehalten. Die Aufnahme 23 hat eine der Strömung 29 zugewandte Vorderkante, die vorzugsweise abgeschrägt ausgebildet ist. Die einzelnen Widerstandsschichten 28 des Meßelements 20 sind mittels im Innern der Vorrichtung 1 verlaufenden Anschlußleitungen 24 mit einer in der Figur 1 gestrichelt dargestellten elektronischen Auswerteschaltung 25 elektrisch verbunden, die beispielsweise eine brückenähnliche Widerstandsmeßschaltung enthält. Die Auswerteschaltung 25 ist zum Beispiel im Trägerteil 18 oder im Halteteil 19 der Vorrichtung 1 untergebracht. Wird die Auswerteschaltung 25 zum Beispiel im Trägerteil 18 untergebracht, so ist es möglich, diese beispielsweise mittels eines Kühlkörpers vom in der Ansaugleitung 7 strömenden Medium zu kühlen. Mit einer am Halteteil 19 vorgesehenen Steckverbindung 26 können die von der Auswerteschaltung 25 bereitgestellten elektrischen Signale beispielsweise auch einem weiteren elektronischen Steuergerät zur Auswertung zugeführt werden. Auf eine ausführliche Beschreibung der Funktion und des Aufbaus temperaturabhängiger Meßelemente wird verzichtet, da dies der Fachmann dem Stand der Technik entnehmen kann.

Wie in der Figur 2, einer Schnittdarstellung entlang einer Linie II-II in Figur 1, dargestellt ist, besitzt der Meßteil 17 der Vorrichtung 1 eine quaderförmige Gestalt und einen Meßkanal 30, der sich entlang einer mittig im Meßkanal 30 verlaufenden Meßkanalachse 12 von einem zum Beispiel einen rechteckförmigen Querschnitt aufweisenden Einlaß 35 zu einem beispielsweise ebenfalls einen rechteckförmigen Querschnitt aufweisenden Auslaß 36 erstreckt. Die Vorrichtung 1 ist in der Ansaugleitung 7 vorzugsweise mit der Meßkanalachse 12 parallel zur Mittelachse 11 eingebaut. Es ist aber auch möglich, wie in der Figur 2 durch die gestrichelt eingezeichnete Meßkanalachse 12' gekennzeichnet ist, die Vorrichtung 1 mit gedrehter Einbaulage einzubauen, so daß die Meßkanalachse 12' mit der Mittelachse 11 einen Winkel von wenigen Grad einschließen kann. Wie in Figur 1 dargestellt ist, geht der Meßkanal 30 in einen eine S-Form aufweisenden Umlenkkanal 31 über. Der Meßkanal 30 ist von einer der Mittelachse 11 entfernteren Oberfläche 37 und einer der Mittelachse 11 näheren Unterfläche 38 sowie von zwei, in Figur 2 dargestellten Seitenflächen 39, 40 begrenzt. Im Ausführungsbeispiel gemäß Figur 1 ist der Meßkanal 30 mit seiner Meßkanalachse 12 beispielsweise exzentrisch zur Mittelachse 11 angeordnet. Es ist aber auch möglich, wie in Figur 3, einem zweiten Ausführungsbeispiel der erfindungsgemäßen Vorrichtung 1, dargestellt ist, den Meßkanal 30 mit seiner Meßkanalachse 12 zentrisch zu oder im Bereich der Mittelachse 11 der Ansaugleitung 7 anzuordnen. Die Aufnahme 23 für das plattenförmige Meßelement 20 ist einseitig im Trägerteil 18 an der Oberfläche 37 gehalten, so daß die Aufnahme 23 mit dem Meßelement 20 an ihren beiden in etwa parallel zur Meßkanalachse 12 verlaufenden Seitenflächen 21 vom Medium umströmt wird.

Wie in der Figur 2 dargestellt ist, verlaufen die Seitenflächen 39, 40 des Meßkanals 30 schräg zu einer von der Meßkanalachse 12 und der Längsachse 10 aufgespannten Ebene 14 und schließen mit dieser einen spitzen Winkel ein, so daß sich der Meßkanal 30 in Strömungsrichtung 29 gesehen, axial verjüngt, um mit einem kleinsten Querschnitt an dem Auslaß 36 in ein erstes Teilstück 32 des Umlenkkanals 31 zu münden. Das Meßelement 20 ist dabei in der Aufnahme 23 stromaufwärts der engsten Stelle des Meßkanals 30 beziehungsweise stromaufwärts des Auslasses 36 im Meßkanal 30 angeordnet. Die in Strömungsrichtung 29 vorgesehene Verjüngung des Meßkanals 30 bewirkt, daß im Bereich des Meßelements 20 eine möglichst ungestörte, gleichmäßige Parallelströmung herrschen kann. Um Strömungsablösungen im Bereich des Einlasses 35 des Meßkanals 30 zu vermeiden, besitzt der Einlaßbereich des Meßkanals 30 eine in Figur 1 dargestellte, abgerundete Berandungsfläche 42.

Eine in der Projektion des Auslasses 36 in Strömungsrichtung 29 auf die gegenüberliegende Wandung des Umlenkkanals 31 angeordnete Randfläche 45 des ersten Teilstücks 32 des Umlenkkanals 31 zur Strömung 29 hin ist nicht senkrecht, sondern geneigt ausgebildet, so daß ein von der Meßkanalachse 12 und von der Randfläche 45 eingeschlossener Neigungswinkel α vorzugsweise etwa 45 Grad beträgt. Es ist aber auch möglich, die Randfläche 45 mit einem Neigungswinkel α auszubilden, der im Bereich von etwa 30 bis 60 Grad liegt. Wie in der Figur 1 dargestellt ist, schließt sich stromabwärts der Randfläche 45 an das erste Teilstück 32 quer zu diesem beziehungsweise quer zur Richtung der Längsachse 10 ein zweites Teilstück 33 des Umlenkkanals 31 an. Die geneigte Randfläche 45 ist vorgesehen, um das vom Auslaß 36 des Meßkanals 30 in das erste Teilstück 32 einströmende Medium entlang der Randfläche 45 in das zweite Teilstück 33 umzuleiten. Die Randfläche 45 erstreckt sich dabei in etwa bis zur Schnittlinie II-II beziehungsweise zur Mittelachse 11 in Figur 1. Die Randfläche 45 weist dabei in Richtung der Längsachse 10 eine Breite br auf, die etwas geringer ist als die Breite b des Meßkanals 30 in Richtung der Längsachse 10. Es ist aber auch möglich, die Randfläche 45 mit einer Breite br entsprechend der Breite b des Meßkanals 30 auszubilden. Die Breite br der Randfläche 45 sollte aber zumindest 2/3 der Breite b des Meßkanals 30 betragen. Wie in Figur 2 dargestellt ist, besitzt die Randfläche 45 senkrecht zur Breite br eine Tiefe tr, die vorzugsweise etwa der Tiefe t des Meßkanals 30 senkrecht zu seiner Breite b am Einlaß 35 entspricht. Es ist aber auch möglich, die Randfläche 45 mit einer Tiefe tr auszubilden, die etwas geringer ist als die Tiefe t des Einlasses 35 des Meßkanals 30. Anschließend an die Randfläche 45 verläuft die Wandung des ersten Teilstücks 32 etwa in Richtung der Längsachse 10.

Der aus erstem Teilstück 32 und zweitem Teilstück 33 zusammengesetzte Umlenkkanal 31 hat vorzugsweise einen rechteckförmigen Querschnitt, der in etwa der Querschnittsfläche des Einlasses 35 des Meßkanals 30 entspricht, so daß sich an dem Auslaß 36 zwischen dem Meßkanal 30 und dem Umlenkkanal 31 der Strömungsquerschnitt an einer Stufe 43 abrupt vergrößert. Das im Meßkanal 30 strömende Medium gelangt stromabwärts des Auslasses 36 zunächst in das erste Teilstück 32, wird an der Randfläche 45 umgelenkt und strömt von dieser in das zweite Teilstück 33 weiter. Wie in den Figuren 1 und 3 durch einen eingezeichneten Pfeil 46 dargestellt ist, verläßt das Medium danach das zweite Teilstück 33 über eine Auslaßöffnung 47 und trifft im wesentlichen quer zur Strömungsrichtung 29 wieder in die Ansaugleitung 7 ein. Die Auslaßöffnung 47 besitzt wie der Umlenkkanal 31 beispielsweise einen rechteckförmigen Querschnitt und ist an einer parallel zur Meßkanalachse 12 orientierten, unteren Außenfläche 50 des Meßteils 17 vorgesehen. Wie in den Figuren 1 und 3 dargestellt ist, schließt sich rechts von der rechteckförmigen Auslaßöffnung 47 quer zur unteren Außenfläche 50 die der Strömung 29 entgegenstehende Berandungsfläche 42 des Meßteils 17 an, die stromaufwärts des Einlasses 35 des Meßkanals 30 in abgerundeter Form von der unteren Außenfläche 50 zur Unterfläche 38 des Meßkanals 30 bis an den Einlaß 35 führt.

Die geneigte Ausbildung der Randfläche 45 im Umlenkkanal 31 bewirkt, daß von dem Auslaß 36 des Meßkanals 30 ausgehende Störungen in der Strömung, die zum Beispiel in Form von Wirbeln oder in Form von Druckwellen auftreten können, an der Randfläche 45 reflektiert werden. Dabei ergibt sich abhängig vom Entstehungsort der Wirbel beziehungsweise der Druckwellen über die in Richtung der Längsachse 10 verlaufende Breite der Stufe 43 beziehungsweise des Auslasses 36 hinweg ein unterschiedlicher Abstand zur Randfläche 45, so daß die entlang der Breite entstehenden, einzelnen Wirbel beziehungsweise Druckwellen zeitlich versetzt an der Randfläche 45 reflektiert werden, mit der Folge, daß diese zudem in ihrer Richtung umgelenkt werden und sich diese in ihrer auf das Meßelement 20 störenden Wirkung insgesamt abschwächen. Durch diese zeit- und ortsabhängige Reflexion der Störungen an der Randfläche 45 kann eine Beeinflussung des vom Meßelement 20 abgegebenen elektrischen Signals ausgeschlossen werden. Damit ergibt sich, daß eine bei pulsierender Strömung ansonsten auftretende Fehlanzeige des Meßelements 20 stark verringert oder sogar vermieden werden kann.

In der Figur 3, einem erfindungsgemäßen Ausführungsbeispiel, bei dem alle gleichen oder gleichwirkenden Teile mit denselben Bezugszeichen der Figuren 1 und 2 gekennzeichnet sind, ist stromabwärts der Randfläche 45 eine Öffnung 55 im Umlenkkanal 31 dargestellt, die beispielsweise in Form einer Bohrung eine Verbindung der Strömung im Umlenkkanal 31 zur Außenströmung in der Ansaugleitung 7 herstellt. Die Öffnung 55 ist zum Beispiel als kreisrunde Bohrung ausgebildet, die sich von einer der Seitenwände 27 des Meßteils 17 den Überschneidungsbereich vom ersten Teilstück 32 in das zweite Teilstück 33 des Umlenkkanals 31 erstreckt. Es ist aber auch möglich, wie in Figur 3 gestrichelt dargestellt ist, die Öffnung 55 ausgehend von der unteren Außenfläche 50 des Meßteils 17 zum zweiten Teilstück 33 hin verlaufend vorzusehen. Die Öffnung 55 weist einen relativ kleinen Querschnitt auf und hat einen Öffnungsdurchmesser von wenigen Millimetern, beispielsweise 2 mm. Selbstverständlich können auch mehrere Öffnungen 55 vorhanden sein. Durch die zumindest eine Öffnung 55 kann der vom Umlenkkanal 31 gebildete Resonanzraum für die stromab des Auslasses 36 des Meßkanals 30 abgehenden Druckwellen derart beeinflußt werden, daß es durch einen Druckausgleich zu einer Abschwächung der an der Randfläche 45 reflektierten Druckwellen kommt. Dabei läßt sich durch die Größe des Querschnitts der zumindest einen Öffnung 55 die Eigenfrequenz des Resonanzraums auf die Frequenz der abgehenden Druckwellen in der Weise abstimmen, daß es zu einer weiteren Verbesserung des vom Meßelement 20 abgegebenen Meßergebnisses kommt.

Außerdem ermöglicht die zumindest eine Öffnung 55, daß durch den Druckausgleich der Strömung im Umlenkkanal 31 zur Strömung in der Ansaugleitung 7 noch unter Umständen abgeschwächt vorhandene Druckwellen im Umlenkkanal 31 in die Ansaugleitung 7 entweichen können, ohne dabei das vom Meßelement 20 abgegebene Meßergebnisses nachteilig zu beeinflussen.

## Patentansprüche

1. Vorrichtung zur Messung der Masse eines strömenden Mediums, insbesondere der Ansaugluft von Brennkraftmaschinen, mit einem vom strömenden Medium umströmten, temperaturabhängigen Messelement (20), das in einem in der Vorrichtung verlaufenden Messkanal angeordnet ist, der sich von einem Einlass (35) zu einem Auslass (36) erstreckt, an den sich ein erstes Teilstück (32) eines Umlenkkanals anschließt, in welches das Medium vom Auslass strömt und von einer Randfläche (45) des ersten Teilstücks in ein sich in Strömungsrichtung (29) an das erste Teilstück des Umlenkkanals anschließendes zweites Teilstück (35) des Umlenkkanals umgelenkt wird, wobei sich in Strömungsrichtung (29) an das erste Teilstück (32) des Umlenkkanals (31) das zweite Teilstück (33) mit einer Auslassöffnung (47) anschließt, wobei die Randfläche (45) des ersten Teilstücks (32) des Umlenkkanals (31) in der Projektion des Auslasses (36) in Strömungsrichtung (29) auf die gegenüberliegende Wandung des ersten Teilstücks (32) liegt und zur Strömungsrichtung (29) im Messkanal (30) hin geneigt ausgebildet ist, **dadurch gekennzeichnet dass** im ersten Teilstück (32) oder im zweiten Teilstück (33) zumindest eine Öffnung (55) vorgesehen ist, die eine Verbindung zu dem die Vorrichtung (1) umströmenden Medium herstellt.

2. Vorrichtung nach Anspruch 1, **dadurch gekennzeichnet, dass** die Randfläche (45) eine Tiefe (tr) und eine senkrecht dazu verlaufende Breite (br) aufweist, die in etwa der Breite (b) des Einlasses (35) des Messkanals (30) entspricht.

3. Vorrichtung nach Anspruch 1 oder 2, **dadurch gekennzeichnet, dass** ein von der Randfläche (45) und der Strömungsrichtung (29) im Messkanal (30) eingeschlossener Neigungswinkel (α) im Bereich von etwa 30 bis 60 Grad liegt.

4. Vorrichtung nach Anspruch 3, **dadurch gekennzeichnet, dass** der Neigungswinkel (α) etwa 45 Grad beträgt.

5. Vorrichtung nach Anspruch 1, **dadurch gekennzeichnet, dass** die Breite (br) der Randfläche (45) zumindest 2/3 der Breite (b) des Messkanals (30) beträgt.

6. Vorrichtung nach Anspruch 1, **dadurch gekennzeichnet, dass** die Randfläche (45) eine Breite (br) und eine senkrecht dazu verlaufende Tiefe (tr) hat und die Tiefe (tr) der Randfläche (45) etwa der Tiefe (t) des Messkanals (30) am Einlass (35) entspricht.

7. Vorrichtung nach Anspruch 1, **dadurch gekennzeichnet, dass** die zumindest eine Öffnung (55) zu Seitenwänden (27) und/oder einer unteren Außenfläche (50) eines den Messkanal (30) aufweisenden Messteils (17) der Vorrichtung (1) führt.

8. Vorrichtung nach Anspruch 1, **dadurch gekennzeichnet, dass** der Messkanal (30) einen rechteckförmigen Querschnitt aufweist, der sich vom Einlass (35) zum Auslass (36) hin verjüngt.

9. Vorrichtung nach Anspruch 1, **dadurch gekennzeichnet, dass** der Umlenkkanal (31) einen rechteckförmigen Querschnitt aufweist, wobei das erste Teilstück (32) derart ausgebildet ist, dass sich der Strömungsquerschnitt stromab des Auslasses (36) des Messkanals (30) abrupt vergrößert.

## Claims

1. Device for measuring the mass of a flowing medium, in particular of the intake air of internal combustion engines with a temperature-dependent measuring element (20), around which the flowing medium flows and which is arranged in a measuring duct which runs in the device and which extends from an inlet (35) to an outlet (36) which has adjoining it a first portion (32) of a deflecting duct, into which portion the medium flows from the outlet and is deflected by an edge surface (45) of the first portion into a second portion (33) of the deflecting duct, the said second portion adjoining the first portion of the deflecting duct in the direction of flow (29), the first portion (32) of the deflecting duct (31) having adjoining it in the direction of flow (29) the second portion (33) with an outlet port (47), the edge surface (45) of the first portion (32) of the deflecting duct (31) lying in the projection of the outlet (36) in the direction of flow (29) onto the opposite wall of the first portion (32) and being designed to be inclined with respect to the direction of flow (29) in the measuring duct (30), **characterized in that,** in the first portion (32) or in the second portion (33), at least one port (55) is provided which makes a connection with the medium flowing around the device (1).

2. Device according to Claim 1, **characterized in that** the edge surface (45) has a depth (tr) and a width (br) which runs perpendicularly thereto and which corresponds approximately to the width (b) of the inlet (35) of the measuring duct (30).

3. Device according to Claim 1 or 2, **characterized in that** an angle of inclination (α) formed by the edge surface (45) and the direction of flow (29) in the measuring duct (30) lies in the range of about 30 to 60 degrees.

4. Device according to Claim 3, **characterized in that** the angle of inclination (α) amounts to about 45 degrees.

5. Device according to Claim 1, **characterized in that** the width (br) of the edge surface (45) amounts to at least 2/3 of the width (b) of the measuring duct (30).

6. Device according to Claim 1, **characterized in that** the edge surface (45) has a width (br) and a depth (tr) running perpendicularly thereto, and the depth (tr) of the edge surface (45) corresponds approximately to the depth (t) of the measuring duct (30) at the inlet (35).

7. Device according to Claim 1, **characterized in that** the at least one port (55) leads to side walls (27) and/or a lower outer surface (50) of a measuring part (17) of the device (1), the said measuring part having the measuring duct (30).

8. Device according to Claim 1, **characterized in that** the measuring duct (30) has a rectangular cross section which tapers from the inlet (35) towards the outlet (36).

9. Device according to Claim 1, **characterized in that** the deflecting duct (31) has a rectangular cross section, the first portion (32) being designed in such a way that the flow cross section increases abruptly downstream of the outlet (36) of the measuring duct (30).

## Revendications

1. Dispositif pour mesurer la masse d'un fluide en écoulement, notamment de l'air aspiré par un moteur à combustion interne, comportant un élément de mesure (20) balayé par le fluide en écoulement, indépendant de la température, et installé dans un canal de mesure traversant le dispositif, s'étendant d'une entrée (35) jusqu'à une sortie (36), et se poursuivant par une première partie (32) d'un canal de déviation qui est traversée par le fluide arrivant de la sortie pour être dévié par une surface de bord (45) de la première partie dans une seconde partie (35) du canal de déviation qui fait suite dans le sens de l'écoulement (29) à la première partie du canal de renvoi,
la direction d'écoulement (29), au niveau de la première partie (32) du canal de déviation (31) reliant la seconde partie (33) à un orifice de sortie (47),
selon lequel
la surface de bord (45) de la première partie (32) du canal de déviation (31) se situe dans la projection de la sortie (36) dans le sens de l'écoulement (29), sur la paroi opposée de la première partie (32) et de façon inclinée par rapport à la direction d'écoulement (29) dans le canal de mesure (30),
**caractérisé en ce qu'**
au moins une ouverture (55) est prévue dans la première partie (32) ou dans la seconde partie (33), cette ouverture réalisant la communication avec le fluide enveloppant le dispositif.

2. Dispositif selon la revendication 1,
**caractérisé en ce que**
la surface de bord (45) a une profondeur (tr) et une largeur (br) perpendiculaires à celle-ci de façon à correspondre sensiblement à la largeur (b) de l'entrée (35) du canal de mesure (30).

3. Dispositif selon la revendication 1 ou 2,
**caractérisé en ce que**
l'angle d'inclinaison (α) compris entre la surface de bord (45) et la direction d'écoulement (29) dans le canal de mesure (30) se situe dans une plage comprise entre 30 et 60°.

4. Dispositif selon la revendication 3,
**caractérisé en ce que**
l'angle d'inclinaison (α) est de l'ordre de 45°.

5. Dispositif selon la revendication 1,
**caractérisé en ce que**
la largeur (br) de la surface de bord (45) représente au moins 2/3 de la largeur (b) du canal de mesure (30).

6. Dispositif selon la revendication 1,
**caractérisé en ce que**
la surface de bord (45) a une largeur (br) et une profondeur (tr) perpendiculaires à celle-ci, la profondeur (tr) de la surface de bord (45) correspondant sensiblement à la profondeur (t) du canal de mesure (30) au niveau de l'entrée (35).

7. Dispositif selon la revendication 1,
**caractérisé en ce qu'**
au moins une ouverture (55) aboutit aux parois latérales (27) et/ou à une surface extérieure inférieure (50) d'une partie de mesure (17) comportant le canal de mesure (30) du dispositif (1).

8. Dispositif selon la revendication 1,
**caractérisé en ce que**
le canal de mesure (30) a une section rectangulaire qui diminue de l'entrée (35) jusqu'à la sortie (36).

9. Dispositif selon la revendication 1,
**caractérisé en ce que**
le canal de déviation (31) a une section rectangulaire, dont la première partie (32) est réalisée pour que la section d'écoulement en aval de la sortie (36) du canal de mesure (30) s'agrandisse de manière brusque.
